# EUROPEAN PATENT APPLICATION

(11) **EP 2 374 740 A2**
(43) Date of publication of application: **12.10.2011**
(21) Application number: 11460007.5
(22) Date of filing: 21.02.2011
(51) Int. Cl.: B65G 39/09

(54) **Roller of a belt conveyor**

(30) Priority: 06.04.2010 PL 39091610
(71) Applicant: Akademia Gomiczo-hutnicza Im. Stanislawa Staszica, 30-059 Kraków (PL)
(72) Inventor: Furmanik, Kazimierz, 30-316 Krakow (PL); Kalukiewicz, Antoni, 30-145 Krakow (PL); Kulinowski, Piotr, 30-036 Krakow (PL); Wieloch, Stanislaw, 33-300 Nowy Sacz (PL); Lasota. Tomasz, 44-190 Knurow (PL)
(74) Representative: Gubala, Jozef

(57) **Abstract**

The roller of belt-conveyor having split bearings, stopper rings, stoppers, compound sealing rings and thrower sealing rings, characterised by that, that it has a smooth metal tube housing (1) both ends of which are closed with flanged hubs (2) made of metal by forging or machining, on external faces (3) of the hubs (2) there are projecting graded half-shafts (4) located on longitudinal axis (5) of the roller, bases for the half-shafts (4) are sockets situated in cylindrical flanges (7) of the hubs (2), on split bearings (8) are situated sleeves (9) provided with stoppers (10) and on the surfaces of the sleeves (9) are made opposite flat cantings (11) which enable mounting the sleeves (9) in forks of the frame of conveyor and said tube housing (1) is connected to the hubs (2) by welding.

## Description

The invention subject-matter is a roller of belt-conveyor used in extractive industry, sugar industry, heat engineering and building industry.

The roller of a belt-conveyor known from Polish patent No. 164187 has bearings mounted on an axle. The bearings have sealings on their both ends and sealing packet on their external surfaces. Each bearing together with its sealing are mounted inside two hubs. Inside the hubs an elastic ring is located, advisably made of rubber. The ring is separated from the bearing with the help of a spacer sleeve.

Another roller of belt-conveyor known from the Polish patent No. 170870 has a divided tube housing which consist of two finned sleeves. One end of each sleeve is a hub for a bearing and the opposite end of the sleeve is connected with a central ring with the help of nuts mounted on the ends of immovable axle supported in the hubs. The finned sleeves and the central ring have conical fit surfaces which close inside chambers of the divided tube housing.

The roller of belt-conveyor known from Polish patent No. 170831 consists of two finned rolls mounted on conical ends of a movable shaft. The bearings of the shaft are mounted in a sleeve situated centrally between the finned rolls. The sleeve is connected with a bracket mounted in a slot between the rolls in order to support the roller.

The roller of belt-conveyor known from Polish utility model No. 62446 consists of an axle and a rotary housing mounted on the axle. The inner surface of the housing is covered with silencer material.

Disadvantage of the known rollers, working in hard conditions, dustiness and in variable weather conditions on the open areas, is their high weight, low mechanical efficiency and failure frequency caused by seizing mating rotary elements. High resistance to motion causes high energy consumption, rapid wear and failure frequency.

Purpose of the invention is to construct a roller for the belt-conveyor which will have low resistance to rotary motion, low weight and thus will enable to obtain low energy consumption, lengthen of life and operational reliability. Furthermore, the new roller is characterized by simplicity of structure and easy assembling and disassembling.

Roller of the belt-conveyor, according to the invention is characterised by that, that it consist of a smooth tube housing closed on both ends with flanged metal hubs. The hubs are forged or welded. On external ends of the hubs there are projecting graded half-shafts located on longitudinal symmetry axis of the roller. The bases of the half-shafts are sockets situated in cylindrical flanges of the hubs. Sleeves having stoppers are mounted on the bearings. The sleeves have on their surfaces opposite flat cantings which enable to situate the sleeves in forks of the belt-conveyor frame. The tube housing is connected with the hubs by welding.
Optional solution of belt conveyor is characterized by that, that the metal tube housing is provided with a layer of plastic having low friction factor in order to silence the work of the belt of the conveyor with the ends connected together with metal clamps.

The advantage of the roller according to the invention is its design simplification, easy assembling and disassembling, low resistance to motion. The metal tube housing of the optional roller according to the invention is provided with a plastic layer which enables silent cooperation of the roller and metal joints of the ends of belt. Additional advantage of the invention is low weight of the roller and thereby lower energy consumption and higher lifetime of the roller.

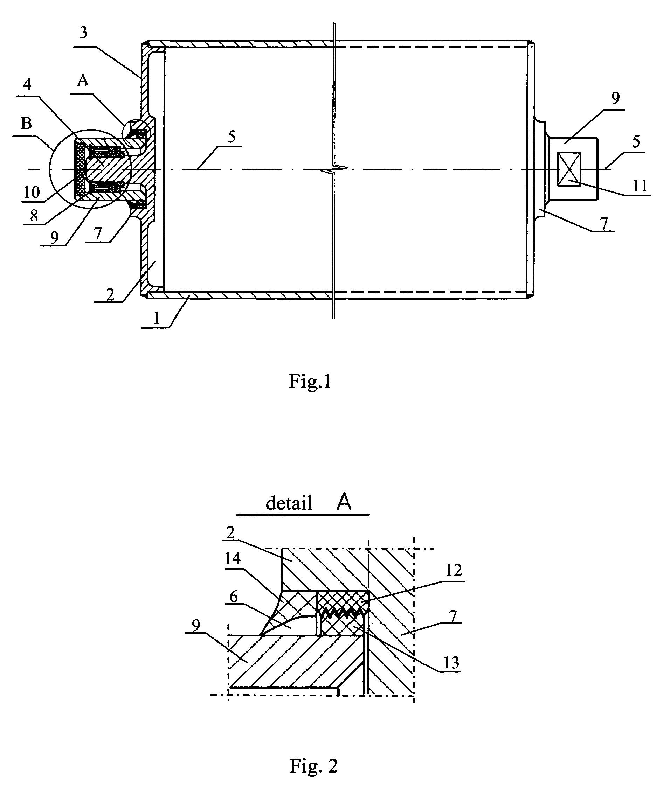

The invention subject matter in example of realisation is visualized on drawers where fig. 1 shows the roller in its longitudinal section and main sideview, fig.2 shows detail "A" of the roller in longitudinal section, fig.3 shows detail "B" in longitudinal section, fig.3 shows the alternative version of the roller in its longitudinal section and its main sideview.

The roller according to the invention consists of a smooth metal tube housing **1** both ends of which are closed with flanged metal hubs **2.** The hubs **2** are made of metal by forging or machining. On external faces **3** of the hubs **2** there are projecting graded half-shafts **4** located on longitudinal axis **5** of the roller. Bases for the half-shafts **4** are sockets **6** situated in cylindrical flanges **7** of the hubs **2.** On split bearings **8** are situated sleeves **9** provided with stoppers **10.** On the surfaces of the sleeves **9** are made opposite flat cantings **11** which enable mounting the sleeves **9** in forks of non-visualized frame of the conveyor. Each of the sockets **6** of the hubs **2** has a pair of compound sealing rings **12** and **13** and plastic throwers **14** shaped like outside-turned flanges. The internal rings of the split bearings **8** are mounted on half-shafts **4** on their parts having smaller diameter " d' " and supported on their parts having bigger diameter" d". The external rings of the bearings **8** are mounted inside the sleeves **9** on their parts having bigger internal diameter "D' " and supported on their parts having smaller internal diameter " D ". The external rings of the split bearings **8** are protected against displacement by stopper rings **15** situated in circumferential grooves 15' which are made inside the sleeves **9** on their parts having bigger internal diameter " D' ". The internal rings of the split bearings **8** are protected against displacement with the help of stopper rings **16** situated in circumferential grooves **16'** made on the surface of the half-shifts **4** on their parts having smaller diameter "d' ". The tube housing **1** is connected to the hubs **2** by welding.

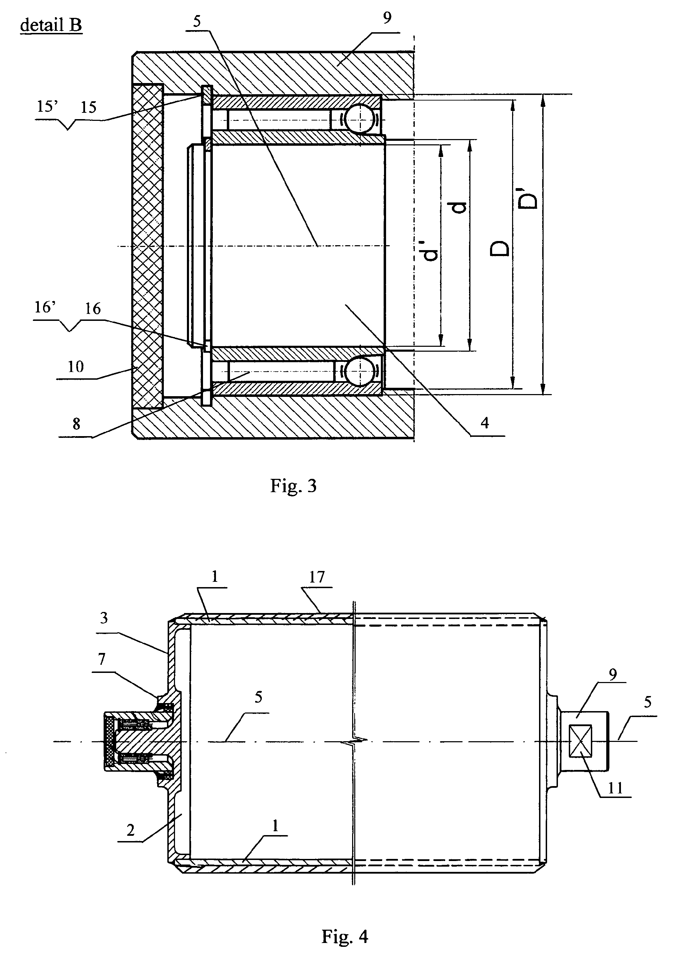

In alternative version of the invention visualized on fig.4 the smooth metal housing **1** is coated with plastic layer **17** in order to silence the cooperation of the belt conveyor with the ends of belt connected together with metal clamps.

## Claims

1. The roller of belt-conveyor having split bearings, stopper rings, stoppers, compound sealing rings and thrower sealing rings, **characterised by** that, that it has a smooth metal tube housing **1** both ends of which are closed with flanged hubs **2** made of metal by forging or machining, on external faces **3** of the hubs **2** there are projecting graded half-shafts **4** located on longitudinal axis **5** of the roller, bases for the half-shafts **4** are sockets **6** situated in cylindrical flanges **7** of the hubs **2,** and on said split bearings **8** are situated sleeves **9** provided with stoppers **10** and on the surfaces of the sleeves **9** are made opposite flat cantings **11** which enable mounting the sleeves **9** in forks of the frame of conveyor and said tube housing **1** is connected to the hubs **2** by welding.

2. The roller of belt conveyor according to claim 1, **characterized by** that, that the smooth metal tube housing **1** is coated with plastic layer **17** in order to silence the cooperation of the belt conveyor with the ends of belt connected together with metal clamps.
